# EUROPÄISCHE PATENTSCHRIFT

(11) **EP 0 843 788 B1**
(45) Veröffentlichungstag und Bekanntmachung des Hinweises auf die Patenterteilung: **04.04.2001**
(21) Anmeldenummer: 97923041.4
(22) Anmeldetag: 09.05.1997
(51) Int. Cl.: F16B 13/02, F16B 19/00

(54) **BEFESTIGUNGSELEMENT UND VERFAHREN ZU SEINER VERANKERUNG**
SECURING COMPONENT AND METHOD OF ANCHORING IT
ELEMENT DE FIXATION ET PROCEDE D'ANCRAGE ASSOCIE

(30) Priorität: 24.05.1996 DE 19620955
(43) Veröffentlichungstag der Anmeldung: 27.05.1998
(73) Patentinhaber: HILTI Aktiengesellschaft, 9494 Schaan (LI)
(72) Erfinder: GSCHWEND, Hans, CH-9470 Buchs (CH); KELLER, Kai-Uwe, A-6800 Feldkirch-Tisis (AT)
(74) Vertreter: Wildi, Roland
(86) Internationale Anmeldenummer: EP9702386
(87) Internationale Veröffentlichungsnummer: WO9745646

(56) Entgegenhaltungen:
- EP-A- 0 701 068
- EP-A- 0 702 180
- DE-A- 3 004 773
- DE-A- 4 407 349
- FR-A- 934 263
- US-A- 2 240 425
- US-A- 4 507 817
- US-A- 4 617 692
- US-A- 4 878 794
- US-A- 5 171 118

## Beschreibung

Die Erfindung betrifft ein Befestigungselement mit einem rohrförmigen Schaft, dessen der Setzrichtung abgewandter, rückwärtiger Endabschnitt mit Lastangriffsmitteln ausgestattet ist. Die Erfindung betrifft auch ein Verfahren zum Verankern eines derartigen Befestigungselements gemäss dem Oberbegriff des Patentanspruchs 9.

Für die Erstellung von Befestigungen in unterschiedlich festen Untergründen werden verschiedene Verfahren eingesetzt. Am gebräuchlichsten sind sequentielle Verfahren und die Direkt-Montagetechnik. Sequentielle Befestigungsverfahren sind für alle Arten von Untergründen geeignet. Je nach Art des Untergrunds und der zu erzielenden Befestigungswerte kommen auch unterschiedliche Arten von Befestigungselementen zum Einsatz. Bei dem sequentiellen Verfahren wird zunächst mit einer Bohreinrichtung im Untergrund eine Aufnahmebohrung erstellt. Die Bohreinrichtung besteht dabei aus einem Metall-, Gesteins- oder auch Holzbohrer, der von einem Handgerät mit motorischem Drehantrieb und gegebenenfalls axialer Schlagunterstützung angetrieben wird. Nach der Erstellung der Aufnahmebohrung wird ein Befestigungselement - üblicherweise ein Dübel - in die Aufnahmebohrung eingesetzt und in den meisten Fällen durch Eindrehen einer Schraube oder durch Einschlagen eines Dorns aufgespreizt und in der Aufnahmebohrung verankert. Als mechanische Befestigungselemente können auch Kunststoff- oder Metalldorne mit einem Kopf eingesetzt werden, die mit einem Hammer in die vorgebohrte Aufnahmebohrung eingetrieben werden. Der Haltemechanismus beruht meist auf Reibschluss, in Hohllochziegeln manchmal auch auf Formschluss.

Bei der Direkt-Montagetechnik wird ein spezielles Befestigungselement mit Hilfe eines pulverkraftbetriebenen Setzgerätes direkt in den Untergrund eingetrieben. Bei dieser Befestigungsmethode entfällt das separate Erstellen einer Aufnahmebohrung für das Befestigungselement. Die Direkt-Montagetechnik ist schnell und führt zu Befestigungen mit hohen Haltewerten. Allerdings ist die bekannte Direkt-Montagetechnik nur für mehr oder weniger duktile Untergründe, wie beispielsweise Stahl, Kalksandstein, Beton oder ggf. Holz, geeignet.

Weniger feste oder spröde Untergründe, wie beispielsweise Ziegelmauerwerk, werden bei der bekannten Direkt-Montagetechnik mittels pulverkraftbetriebenen Setzgeräten sehr stark beansprucht und oft sogar beschädigt und führen zu keinen zuverlässigen Befestigungen. Daher wird für Verankerungen in diesen Untergründen im wesentlichen nur das sequentielle Befestigungsverfahren eingesetzt. Dieses schont den Untergrund und führt zu zuverlässigen Befestigungen mit den gewünschten Haltewerten. Allerdings muss dafür ein deutlich grösserer Zeitaufwand je Befestigungspunkt in Kauf genommen werden. Ausserdem sind meist separate Geräte für die Erstellung der Aufnahmebohrungen und für die Verankerung der Befestigungselemente in den Aufnahmebohrungen erforderlich, beispielsweise ein Bohrgerät mit Bohreinrichtung zum Bohren der Aufnahmebohrung und ein Schraubgerät zum Eindrehen einer Befestigungsschraube in einen Dübel, wobei der Dübel durch Aufspreizen verankert wird.

Für die Befestigung von Isolationsplatten oder die Festlegung von Kabeln oder Rohren am Untergrund ist das Befestigungselement mit speziell ausgebildeten Lastangriffsmitteln ausgestattet. Aus der DE-A-44 32 780 der Anmelderin ist ein Lastangriffsmittel bekannt, das in der Elektromontage, beispielsweise zur Festlegung von Kabeln oder Isolationsrohren, einsetzbar ist. Es weist ein Fussteil und einen davon abragenden, im wesentlichen bogenförmigen Bügel auf. Im Fussteil ist eine Durchgangsbohrung vorgesehen, durch welche das im Untergrund zu verankernde Befestigungselement geführt ist. In der EP-A-0 492 230 bzw. der dazu korrespondierenden US-A-5,171,118 ist eine Befestigungsvorrichtung für Isolationsplatten, Wandverkleidungen und dergleichen beschrieben. Die Befestungsvorrichtung umfasst ein Befestigungselement zum Verankern im Untergrund und ein Lastangriffsmittel mit einem grossflächigen Kopfteil. Vom Kopfteil ragt ein hohler Schaft ab, der eine axiale Durchgangsbohrung aufweist, die mit einem Widerlager für das durch die Durchgangsbohrung gesteckte Befestigungselement ausgestattet ist. Die Durchgangsbohrung mündet am Kopfteil und ist, beispielsweise durch umklappbare, federnde Lamellen, verschliessbar. Die mechanische Befestigung von Isolationsplatten wird, beispielsweise bei Wärmedämm-Verbund-Systemen, teils allein oder als Ergänzung zum Kleben der Platten eingesetzt.

Aus der DE-A-30 04 773 ist ein rohrförmiges Befestigungselement für weiche Untergründe, wie beispielsweise Leichtbeton, Gipswände oder Holz, bekannt. Es umfasst eine konische Spreizhülse mit einer Durchgangsbohrung und einem Längsschlitz. An ihrem rückwärtigen Ende ragen eine oder mehrere Zungen radial ab, die zur Begrenzung des Eintreibens der Spreizhülse dienen und eine zusätzliche Verankerung der Spreizhülse in der Oberfläche des Aufnahmematerials bewirken. Damit die Hülse einfach in das relativ weiche Aufnahmematerial einhämmerbar ist, läuft das gegenüberliegende Vorderende der Spreizhülse spitz zu und/oder ist geriffelt bzw. gefast. Nachdem die Spreizhülse in das Aufnahmematerial eingesetzt ist, wird sie durch Eindrehen einer konischen Blech- oder Holzschraube radial aufgeweitet und kraftschlüssig verankert.

Aus der US-A-2,240,425 ist ein rohrförmiges Befestigungselement bekannt, das einen im wesentlichen zylindrischen Körper mit einer Durchgangsbohrung und einem sich über die gesamte Länge erstreckenden Schlitz aufweist. Am rückwärtigen Ende besitzt der Körper einen radial abragenden, ringförmigen Flansch. Der gegenüberliegende Endabschnitt des Körpers verjüngt sich konisch auf einen Aussendurchmesser, der kleiner ist als der Durchmesser der vorbereiteten Aufnahmebohrung, damit das Befestigungselement leichter eingetrieben werden kann.

Bei Untergründen aus mehr oder weniger sprödem Ziegelmauerwerk kommt für die Befestigung nur das sequentielle Befestigungsverfahren zum Einsatz. Die in Verbindung mit dem grossflächigen Kopfteil verwendeten mechanischen Befestigungselemente sind üblicherweise Spreizdübel oder Kunststoff- oder Metalldorne, die in die vorgebohrte Aufnahmebohrung eingetrieben und verankert werden. Bei der Befestigung von Isolationsplatten ist es manchmal schwierig, die vorgebohrte Aufnahmebohrung hinter der Platte zu finden. Die Folgen sind Zeitverlust, Ärger, zerschlagene Eintreibdorne, die ersetzt werden müssen u.a.m. Oftmals ist es sogar erforderlich, eine neue Aufnahmebohrung zu erstellen. Ein weiterer Nachteil besteht darin, dass beim sequentiellen Befestigungsverfahren von Isolationsplatten die Qualität der Befestigung während der Applikation nicht kontrolliert werden kann. Üblicherweise wird mit dem Hammer auf das rückwärtige Ende des Kunststoff- oder Metalldoms bzw. auf das Kopfteil geschlagen bis es oberflächenbündig zur Isolationsplatte liegt. Diese wird dabei durch die Hammerschläge plastisch verformt. Das Kopfteil liegt dann zwar bündig und leich versenkt im Material der Isolationsplatte; der Anwender ist sich aber nicht sicher, ob die Befestigungsvorrichtung die Isolationsplatte mit der nötigen Mindesthaltekraft am Untergund festlegt. Setzausfälle können dadurch üblicherweise nur mittels Auszuggeräten festgestellt werden.

Es besteht daher der Wunsch nach einem Befestigungselement, welches auch in weniger festen oder spröden Untergründen, wie beispielsweise Ziegelmauerwerk, schnell und zuverlässig verankerbar ist. Desgleichen soll ein Verfahren geschaffen werden, bei dem auf die sequentielle Abfolge des Erstellens einer Aufnahmebohrung und des nachfolgenden Einsetzens eines Befestigungselements in die Aufnahmebohrung und ggf. des Verspreizens des Befestigungselements verzichtet werden kann. Die Notwendigkeit, mehrere verschiedene Geräte für die Erstellung der Aufnahmebohrung und für die nachfolgende Verankerung des Befestigungselements mitzuführen, soll entfallen. Dabei soll der Untergrund geschont werden und sollen Befestigungen mit den geforderten Haltewerten erzielt werden können. Bei der Befestigung von Isolationsplatten soll das mühsame Auffinden einer vorgebohrten Aufnahmebohrung entfallen können. Dabei soll die Befestigung zuverlässig sein und Setzausfälle sollen vermieden werden können.

Die Lösung dieser Aufgaben besteht in einem Befestigungselement mit den im Patentanspruch 1 angeführten Merkmalen. Insbesondere wird durch die Erfindung ein Befestigungselement geschaffen, umfassend einen rohrförmig ausgebildeten, metallischen Schaft mit einer axialen Durchgangsbohrung und einem sich über die gesamte Schaftlänge erstreckenden, axialen Schlitz im Mantel des Schafts, sowie Lastangriffsmittel am der Setzrichtung abgewandten rückwärtigen Endabschnitt des Schafts. Am gegenüberliegenden Vorderende des Schafts sind Meisselschneiden vorgesehen. Der Aussendurchmesser des Schafts verringert sich vom rückwärtigen Ende zum Vorderende. Der Schaft ist unter Verringerung seines Aussendurchmessers über einen wesentlichen Teil seiner Längserstreckung im Untergrund verankerbar. Mit dem erfindungsgemäss ausgebildeten Befestigungselement sind die Voraussetzungen für ein Befestigungsverfahren geschaffen, wie es im kennzeichnenden Abschnitt des Patentanspruchs 9 beschrieben ist. Dabei wird ein Bohrwerkzeug durch die axiale Durchgangsbohrung des Schafts des Befestigungselements geführt, wobei die Bohrschneiden des Bohrwerkzeugs das Vorderende des Schafts überragen und einen Durchmesser aufweisen, der kleiner ist als der Innendurchmesser der Durchgangsbohrung. Das Befestigungselement, das gegenüber der erstellten Aufnahmebohrung ein Übermass aufweist, wird sodann synchron mit dem Bohrvorgang durch schlagendes Eintreiben in der Aufnahmebohrung verankert, insbesondere verklemmt, wobei die Meisselschneiden die Randzone der Aufnahmebohrung schabend meisselnd Kalibrieren. Die Verankerung des Befestigungselements in der Aufnahmebohrung erfolgt durch Verklemmen des Befestigungselements, welches gegenüber dem Nenndurchmesser der Aufnahmebohrung ein Übermass aufweist. Durch das radiale Zusammenpressen gegen die Federkraft des Materials des Befestigungselements wird eine radiale Kraft erzeugt, die zusammen mit dem Haftreibungskoeffizienten und der Anlagefläche den erzielbaren Haltewert festlegt. Nach erfolgter Verankerung des Befestigungselements im Untergrund wird das Bohrwerkzeug aus der axialen Durchgangsbohrung des Schafts herausgezogen.

Dank dem erfindungsgemässen Befestigungselement ist es möglich, Befestigungspunkte gemäss dem erfindungsgemässen Befestigungsverfahren auch auf weniger festen oder spröden Untergründen, wie beispielsweise Ziegelmauerwerk, in einer Direkt-Montagetechnik zu erstellen. Zwar wird nach wie vor eine Aufnahmebohrung erstellt, jedoch wird das Befestigungselement gleichzeitig in der Aufnahmebohrung verankert. Dadurch wird der gesamte Arbeitsvorgang für das Erstellen eines Befestigungspunktes vereinfacht und die Gesamtzeit für die Erstellung des Befestigungspunktes deutlich reduziert. Die Erstellung eines Befestigungspunktes mit dem erfindungsgemässen Befestigungselement nach dem erfindungsgemässen Befestigungsverfahren erfordert auch keine unterschiedlichen Geräte für das Erstellen der Aufnahmebohrung und für das anschliessende Einsetzen und Verankern des Befestigungselements. Das Erstellen der Aufnahmebohrung und das Eintreiben des Befestigungselements erfolgt mit nur einem Gerät. Beispielsweise handelt es sich bei dem Gerät um eine Drehbohreinrichtung mit Axialschlagunterstützung, an die das Bohrwerkzeug angekoppelt wird. Die Erstellung der Aufnahmebohrung erfolgt drehend, während synchron dazu das Befestigungselement durch axiale Schläge in den Untergrund eingetrieben wird. Dabei sind der Schaft und das Bohrwerkzeug voneinander drehentkoppelt. Das rückwärtige Ende des Schafts des Befestigungselements befindet sich vorzugsweise in Anlage zu einer Anschlagschulter am Bohrwerkzeug. Das erfindungsgemässe Befestigungsverfahren ist einfach in seiner Anwendung und vereint die Vorteile einer schnellen Erstellung von Befestigungspunkten in einer Direkt-Montagetechnik mit der schonenden Behandlung des Untergrunds bei sequentiellen Befestigungsverfahren. Durch die Erfindung wird es ermöglicht, auch in weniger festen oder spröden Untergründen, wie beispielsweise Ziegelmauerwerk, Befestigungen mit Hilfe einer raschen und die Produktivität des Anwenders fördernden Direkt-Montagetechnik zu erstellen.

Mit Vorteil weist der Schaft an seinem rückwärtigen Ende einen tellerfederartigen Kragen auf, der sich im wesentlichen radial erstreckt. Der flanschartige Kragen dient beispielsweise zur Abstützung des Befestigungselements an einem festzulegenden Bauteil oder zur Festlegung eines speziell ausgebildeten Lastangriffsmittels am Untergrund. Indem der Kragen eine tellerfederartige Elastizität aufweist, muss eine Vorspannkraft aufgewendet werden, um den Kragen bündig gegen eine angrenzende Oberfläche zu pressen. Diese Vorspannkraft legt zugleich die Mindesthaltekraft des im Untergrund verankerten Schafts fest. Durch diese einfache konstruktive Massnahme hat der Anwender eine einfache Kontrollmöglichkeit, ob das Befestigungselement korrekt gesetzt wurde.

Es erweist sich von Vorteil, wenn die an der Innenwandung des Schafts gemessene grösste Weite des axialen Schlitzes 25% bis 50% des Aussendurchmessers des Schafts im Bereich seines rückwärtigen Endes beträgt. Auf diese Weise ist sichergestellt, dass einerseits genügend Freiraum für ein radiales Zusammenpressen des rohrförmigen Schafts vorhanden ist und andererseits genügend Anlagefläche zur Wandung der Aufnahmebohrung verbleibt, um zusammen mit der aus der Federkraft des radial zusammengepressten Schafts resultierenden Radialkraft und dem Haftreibungskoeffizienten eine ausreichend hohe Reibkraft zu erzielen.

Indem die Weite des Schlitzes vom rückwärtigen Ende des Schafts zu dessen Vorderende abnimmt, kann das Befestigungselement durch die resultierende, leicht konische Form des Schafts besonders einfach in die synchron vorgebohrte Aufnahmebohrung einfädeln. Zudem kompensiert die konische Form insbesondere bei weicheren Untergründen einen möglichen Abrieb an der Bohrlochwandung infolge des Eintreibprozesses, sodass auf der ganzen Verankerungstiefe der Schaft mit etwa gleicher Anpresskraft an der Wandung der Aufnahmebohrung anliegt.

Zur Sicherung der Durchmesserverhältnisse des Vorderendes des Schafts und des Bohrkopfs des Bohrwerkzeugs kann der Schlitz im Bereich des Vorderendes des Schafts mit Vorteil durch einen Schweisspunkt oder dergleichen geschlossen sein. Durch diese konstruktive Massnahme ist der Durchmesser der von den Schneiden meisselnd oder schabend kalibrierten Aufnahmebohrung festgelegt.

Ein zweckmässiges Befestigungselement ist mit Lastangriffsmitteln ausgestattet, die ein Fussteil und einen vom Fussteil abragenden, im wesentlichen bogenförmigen Aufnahmebügel umfassen, wobei im Fussteil eine Durchgangsbohrung für den Schaft vorgesehen ist. Das derart ausgebildete Befestigungselement ist beispielsweise für den Einsatz in der Elektromontage vorgesehen, um Kabel oder leichte Rohre am Untergrund festzulegen. Üblicherweise ist das Lastangriffsmittel aus Kunststoff, was seine Massenfertigung, beispielsweise in einem Kunststoff-Spritzgussverfahren ermöglicht.

Bei einem anderen sehr vorteilhaften Befestigungsmittel für den Einsatz bei der Befestigung von Isolationsplatten umfassen die Lastangriffmittel ein grossflächiges Kopfteil mit einem davon abragenden Schaftteil. Kopfteil und Schaftteil sind von einer ein Widerlager für den rückwärtigen Abschnitt des Schafts des Befestigungselements aufweisenden Ausnehmung durchsetzt. Im kopfseitigen Mündungsbereich der Ausnehmung sind biegsame Verschlusselemente, vorzugsweise gegen das Zentrum ragende, biegsame Segmente, vorgesehen. Kopfteil und Schaftteil des Lastangriffsmittels bestehen vorzugsweise aus Kunststoff und können dadurch einfach massentechnisch in einem Kunststoff-Spritzgussverfahren hergestellt werden. Dieses Befestigungselement für Isolationsplatten erlaubt es in Verbindung mit dem erfindungsgemässen Befestigungsverfahren, Isolationsplatten auch auf spröden Untergründen, wie beispielsweise Ziegelmauerwerk, in einem rationellen Direkt-Montageverfahren zu befestigen. Zur Befestigung einer Isolationsplatte wird ein an ein Handgerät angedöcktes Bohrwerkzeug durch die Durchgangsbohrung des Befestigungselements gesteckt, bis der Bohrkopf das Schneiden tragende Vorderende des Schafts überragt. Die gesamte Montageeinheit, bestehend aus Handgerät, Bohrwerkzeug und Befestigungselement wird durch das Material der Isolationsplatte gegen den Untergrund gepresst. Bei Betätigung des Handgeräts beginnt das Bohrwerkzeug im Untergrund eine Aufnahmebohrung zu erstellen. Sobald das Schneiden tragende Vorderende des Schafts des Befestigungselements den Untergrund berührt, folgt dieses, durch axiale Schläge unterstützt, der Bohrspitze in den Untergrund. Auf diese Weise wird kontinuierlich gebohrt und gleichzeitig der Schaft des Befestigungselements in den Untergrund eingetrieben. Der längsgeschlitzte Schaft weist gegenüber der Aufnahmebohrung ein Übermass auf, er wird daher beim Eintreiben radial zusammengepresst. Der hohle Schaft des Befestigungselements bildet für das Bohrwerkzeug eine radiale Führung. Der sich am Widerlager abstützende Schaft zieht beim Eintreiben in den Untergrund das ein Kopfteil und ein Schaftteil umfassende Lastangriffsmittel in das Material der Isolationsplatte, bis das grossflächige Kopfteil, vorzugsweise bündig, an der Oberfläche der Platte anliegt.

Es erweist sich als zweckmässig, wenn das Widerlager durch eine Schulter gebildet ist, die in der Ausnehmung im Schaftteil vorgesehen ist und vom freien Vorderende des Schaftteils einen Abstand von etwa 8mm bis etwa 25 mm aufweist. Auf diese Weise werden Kältebrücken durch den metallischen Schaft minimiert, andererseits weist der Verbindungsbereich Schaft - Lastangriffsmittel noch eine genügende Stabilität zur Aufnahme von Querkräften auf.

Während das erfindungsgemässe Befestigungsverfahren im Zusammenhang mit einem Mauerwerks- oder Gesteinsbohrer geschildert worden ist, der nach dem Setzvorgang wieder entnommen werden kann, kann in einer Verfahrensvariante vorgesehen sein, das Befestigungselement an seinem in Setzrichtung vorderen Ende lösbar mit einer Bohrspitze auszustatten, an welche das Vorderende eines durch die axiale Bohrung des Befestigungselements geführten Stiftes drehfest angekoppelt wird. Beim Setzvorgang wird die Bohrspitze zur Erstellung der Aufnahmebohrung ausser Eingriff mit dem Vorderende des Befestigungslements gebracht und gegenüber diesem drehentkoppelt. Beim axialen Herausziehen des Stiftes aus der axialen Durchgangsbohrung des Befestigungselements wird der Stift von der Bohrspitze gelöst, wobei eine definierte Mindestkraft aufgewendet werden muss, und verbleibt in der mit dem Befestigungselement bestückten Aufnahmebohrung. Durch die Notwendigkeit, zum Lösen der Verbindung zwischen der Bohrspitze und dem Stift eine definierte Mindestkraft aufwenden zu müssen, kann in diesem Fall der Abziehvorgang gleichzeitig zur Kontrolle von z.B. in Mauerwerksfugen schlecht verankerten Befestigungspunkten (Setzausfällen) herangezogen werden.

Im folgenden wird die Erfindung unter Bezugnahme auf die schematischen Darstellungen anhand von Ausführungsbeispielen näher erläutert. Es zeigen in unterschiedlichen Massstäben:
- Fig. 1: eine Ansicht eines ersten Ausführungsbeispiels eines erfindungsgemässen Befestigungselements mit einem durchgesteckten Bohrwerkzeug;
- Fig. 2: ein zweites Ausführungsbeispiel eines Befestigungselements mit insbesondere für die Elektromontage geeigneten Lastangriffsmitteln in teilweise geschnittener Darstellung;
- Fig. 3: ein drittes Ausführungsbeispiel eines Befestigungsmittels mit Lastangriffsmitteln, die insbesondere zur Befestigung von Isolationsplatten bzw. Wandverkleidungen ausgebildet sind, in teilweise geschnittener Darstellung;
- Fig. 4: eine Ansicht einer Montageeinheit umfassend ein Befestigungselement gemäss Fig. 3, ein Bohrwerkzeug und ein Handgerät; und
- Fig. 5: ein durch eine Isolationsplatte gestecktes und teilweise im Untergrund verankertes Befestigungselement gemäss Fig. 3 mit einem durchgesteckten Bohrwerkzeug in teilweise geschnittener Darstellung.

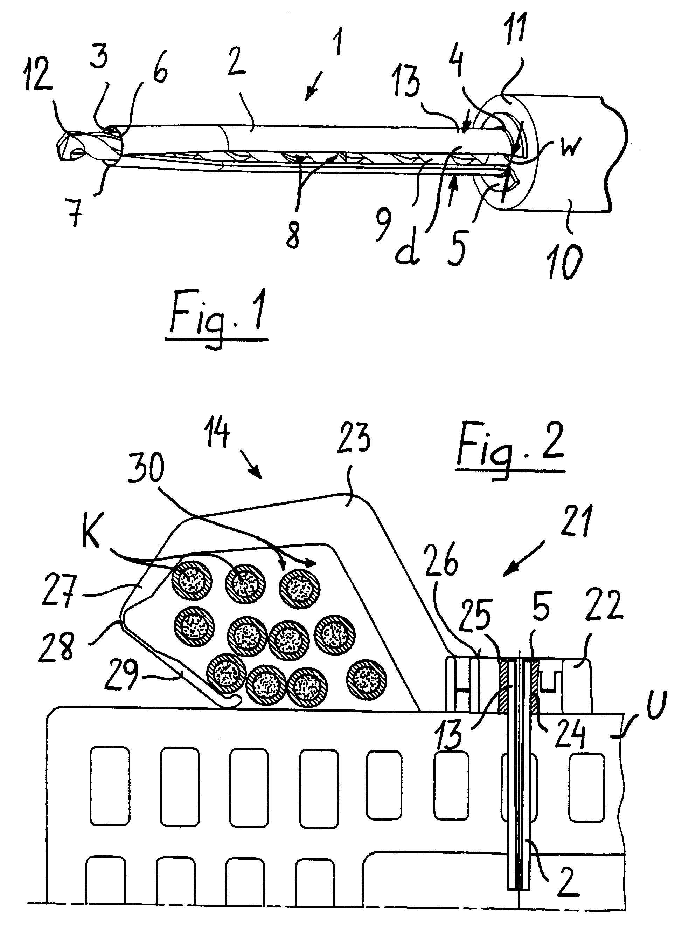

Fig. 1 zeigt ein erstes Ausführungsbeispiel des erfindungsgemässen Befestigungselements, das mit dem Bezugszeichen 1 bezeichnet ist. Es umfasst einen rohrförmigen Schaft 2, der mit einer Durchgangsbohrung 3 versehen ist. An seinem der Setzrichtung abgewandten rückwärtigen Ende 4 ist der Schaft 2 mit einem flanschartigen Kragen 5 ausgestattet, der vorzugsweise eine tellerfederartige Elastizität aufweist. An seinem gegenüberliegenden Vorderende 6 besitzt der Schaft 2 Schneiden 7, die für einen schabenden oder meisselnden Abbau der Randzone einer erstellten Aufnahmebohrung ausgebildet sind. Der Schaft 2 weist einen axialen Schlitz 8 auf, der sich über seine gesamte Länge erstreckt. Im Bereich der Schneiden 7 verjüngt sich der Längsschlitz 8 und kann beispielsweise durch einen Schweisspunkt geschlossen sein. Auf diese Weise ergibt sich insgesamt eine leicht konische Form des Befestigungselements 1, wobei der Aussendurchmesser d des Schafts 2 am rückwärtigen Ende 4 grösser ist als am gegenüberliegenden Vorderende 6. Der Längsschlitz 8 besitzt im Bereich des rückwärtigen Endes 4 des Schafts 2 eine an der Innenwandung der Durchgangsbohrung 3 gemessene Weite w die etwa 25% bis etwa 50% des Aussendurchmessers d des Schafts 2 in diesem Bereich beträgt.

Ein durch die axiale Durchgangsbohrung 3 des Schafts 2 geführtes Bohrwerkzeug 9 überragt das Befestigungselement 1 an seinem Vorderende 6 und an seinem rückwärtigen Ende 4. Am rückwärtigen Ende 4 ragt ein Einsteckende 10 des Bohrwerkzeugs 9 aus der Durchgangsbohrung 3 und erlaubt den Anschluss an eine Werkzeugaufnahme eines nicht näher dargestellten Handgeräts. Das den Kragen 5 aufweisende rückwärtige Ende 4 des Schafts 2 des Befestigungselements ist in Anlage mit einer Schulter 11 am Bohrwerkzeug 9 und stützt sich im Betrieb an der Schulter 11 ab, damit vom Handgerät gelieferte axiale Schläge auf das Befestigungselement 1 übertragbar sind. Das Bohrwerkzeug 9 weist einen Bohrkopf 12 auf, der das mit Schneiden 7 ausgestattete Vorderende 6 des Schafts um einige Millimeter, beispielsweise etwa 5 mm bis 10 mm, überragt. Der grösste Durchmesser des Bohrkopfs 12 ist geringfügig kleiner als der Innendurchmesser der Durchgangsbohrung 3 am Vorderende 6 des Schafts 2.

Beim Setzvorgang eilt der Bohrkopf 12 den Schneiden 7 am Vorderende 6 des Schafts 2 um den genannten Überstand voraus und erstellt eine Aufnahmebohrung, deren Durchmesser dem grössten Durchmesser des Bohrkopfs 12 entspricht. Sobald das Befestigungselement 1 am Untergrund aufsteht, wird es durch die vom Handgerät auf das rückwärtige Ende 4 des Schafts 2 übertragenen axialen Schläge synchron mit der Erstellung der Aufnahmebohrung in den Untergrund eingetrieben. Der Aussendurchmesser des Schafts 2 weist am Vorderende 6 ein Übermass gegenüber dem Durchmesser der Aufnahmebohrung auf. Dadurch tragen die Schneiden 7 am Vorderende 6 des Schafts 2 beim Eintreiben des Befestigungselements 1 die Randzone der Aufnahmebohrung schabend oder meisselnd ab. Der Durchmesser der derart kalibrierten Aufnahmebohrung enspricht sodann im wesentlichen dem Aussendurchmesser des Schafts 2 an den Schneiden 7. Da sich der Aussendurchmesser des Schafts 2 zum rückwärtigen Ende 4 des Schafts hin vergrössert, wird das Befestigungselement 1 beim Eintreiben gegen die Federkraft seines Materials radial zusammengepresst und durch Klemmung in der Aufnahmebohrung verankert. Diese bereits kurz nach Beginn des axialen Eintreibvorgangs wirksame Klemmkraft führt zu einer Entkopplung des üblicherweise drehangetriebenen Bohrwerkzeugs 9 und des Befestigungselements 1.

Am rückwärtigen Endabschnitt 13 des Schafts weist das Befestigungselement 1 Lastangriffsmittel 14 auf. Diese können beispielsweise ein Innengewinde, Bohrungen im Mantel des Schafts 2, vom Kragen abragende Laschen oder ähnliches sein. In dem in Fig. 2 dargestellten und gesamthaft mit dem Bezugszeichen 21 versehenen Ausführungsbeispiel des erfindungsgemässen Befestigungselements umfassen die Lastangriffsmittel 14 ein Fussteil 22 und einen vom Fussteil 22 abragenden, im wesentlichen bogenförmigen Aufnahmebügel 23. Im Fussteil 22 ist eine Bohrung 24 für den Schaft 2 vorgesehen. Eine Ansenkung 25 an der Oberseite 26 des Fussteils 22 dient als Widerlager für den tellerfederartigen Kragen 5 am rückwärtigen Ende 4 des Schafts 2. Am dem Fussteil gegenüberliegenden freien Endbereich 27 des etwa bogenförmigen Aufnahmebügels 23 ist ein Gelenk 28 ausgebildet. Der freie Endabschnitt 29 des Aufnahmebügels 23 ragt in den vom Aufnahmebügel 23 begrenzten Aufnahmeraum 30. Zum Einführen eines Kabels K oder eines Rohres ist der Endabschnitt vom Untergrund U weg in den Aufnahmeraum einschwenkbar. Das Fussteil und der Aufnahmebügel sind vorzugsweise aus Kunststoff spritzgegossen. Das Gelenk 28 kann in diesem Fall einfach als Filmscharnier ausgebildet sein. Die Darstellung zeigt dieses, insbesondere für die Elektromontage geeignete Befestigungselement im am Untergrund U verankerten Zustand mit eingelegten Kabeln K. Als Beispiel für einen spröden Untergrund U ist ein Hohllochziegel dargestellt.

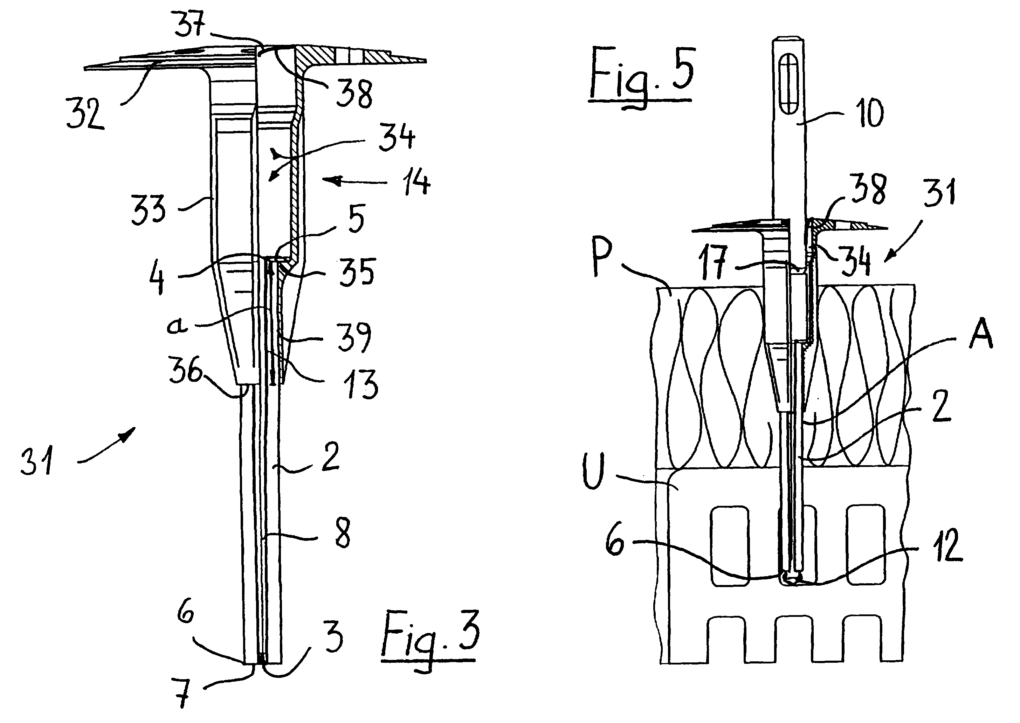

Das in Fig. 3 dargestellte Befestigungselement 31 ist beispielsweise für die Befestigung von Isolationsplatten oder von Wandverkleidungen ausgebildet. Die Lastangriffsmittel 14 umfassen ein grossflächiges Kopfteil 32 mit einem davon abragenden Schaftteil 33. Das Kopfteil 32 und das Schaftteil 33 sind von einer ein Widerlager für den rückwärtigen Abschnitt 13 des Schafts 2 des Befestigungselements 1 aufweisenden Ausnehmung 34 durchsetzt. Das Widerlager wird von einer Schulter 35 gebildet, die im Inneren der Ausnehmung 34 angeordnet ist und vom dem grossflächigen Kopfteil 32 gegenüberliegenden freien Ende 36 des Schaftteils 33 einen Abstand a von etwa 8 mm bis etwa 25 mm aufweist. Im kopfseitigen Mündungsbereich 37 der Ausnehmung 34 sind biegsame, gegen das Zentrum ragende Segmente 38 vorgesehen. Die Lastangriffsmittel 14 haben insgesamt eine pilzförmige Gestalt. Derartig ausgebildete Lastangriffsmittel 14 sind Gegenstand der EP-A-0 492 230 bzw. der dazu korrespondierenden US-A-5,171,118.

Der Schaft 2 des Befestigungselements 1 ist durch die durchgehende Ausnehmung 34 geführt und stützt sich mit seinem tellerfederartigen Kragen 5 an der Schulter 35 ab. Der von der Schulter 35 zum freien Ende 36 des Schaftteils 33 reichende Bohrungsabschnitt 39 der Ausnehmung 34 weist einen Durchmesser auf, der geringfügig kleiner ist, als der Aussendurchmesser des Schafts 2 im rückwärtigen Abschnitt. Dadurch dient der Bohrungsabschnitt 39 als Führung für den Schaft 2 des Befestigungselements 1. Indem der Schaft 2 im Bohrungsabschnitt 39 leicht geklemmt wird, können der Schaft 2 und das pilzartige Lastangriffsmittel 14 vorkonfektioniert werden. Die satte Führung des Schafts 2 garantiert auch eine gute Querkraftübertragung.

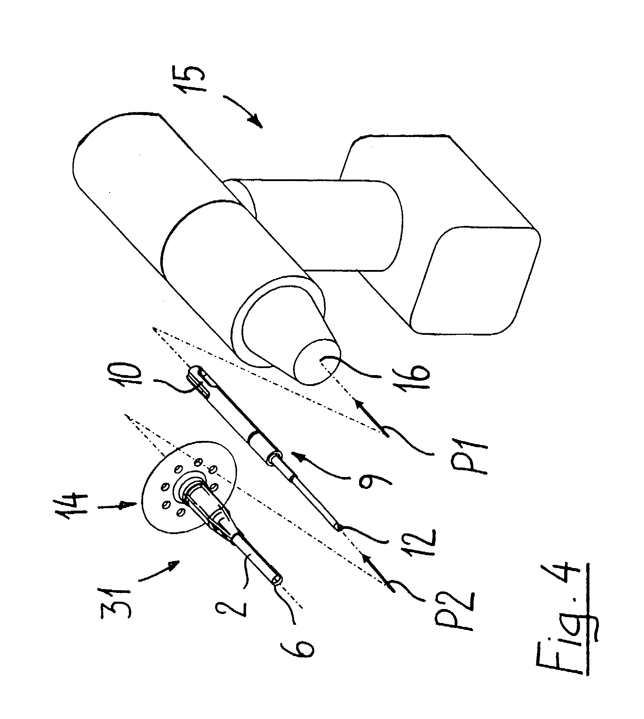

In Fig. 4 ist eine Montageeinheit dargestellt, die es erlaubt, beispielsweise eine Isolationsplatte nach dem erfindungsgemässen Direkt-Montageverfahren an einer Ziegelmauerwand zu befestigen. Die Montageeinheit umfasst ein Befestigungselement 31 gemäss Fig. 3, ein Bohrwerkzeug 9 und ein Handgerät 15. Bei dem Handgerät 15 handelt es sich beispielsweise um ein Drehbohrgerät mit Axialschlagunterstützung. Zur Vorbereitung des Montagevorgangs wird zunächst das Bohrwerkzeug 9 mit seinem Einsteckende 10 in die Werkzeugaufnahme 16 des Handgeräts 15 eingesteckt. Danach wird das Befestigungselement 31 auf das Bohrwerkzeug 9 aufgeschoben, bis der Bohrkopf 12 aus dem Vorderende 6 des Schafts 2 des Befestigungselements 31 ragt. Die Pfeile P1 und P2 verdeutlichen in der Darstellung die Montage des Bohrwerkzeugs 9 und des Befestigungselements 31. Die derart vorbereitete Montageeinheit, bestehend aus dem Handgerät 15, dem Bohrwerkzeug 9 und dem Befestigungselement 31 wird durch das Material der Isolationsplatte gegen den Untergrund gepresst. Bei Betätigung des Handgeräts 15 beginnt das Bohrwerkzeug 9 im Untergrund eine Aufnahmebohrung zu erstellen. Sobald das die Schneiden tragende Vorderende 6 des Schafts 2 des Befestigungselements 31 den Untergrund berührt, folgt dieses, durch axiale Schläge unterstützt, dem Bohrkopf 12 in den Untergrund. Auf diese Weise wird kontinuierlich gebohrt und gleichzeitig der Schaft 2 des Befestigungselements 31 in den Untergrund eingetrieben. Der längsgeschlitzte Schaft 2 weist gegenüber der Aufnahmebohrung ein Übermass auf, er wird daher beim Eintreiben radial zusammengepresst. Der hohle Schaft 2 des Befestigungselements 31 bildet für das Bohrwerkzeug 9 eine radiale Führung. Der sich am Widerlager abstützende Schaft 2 zieht beim Eintreiben in den Untergrund das Lastangriffsmittel 14 in das Material der Isolationsplatte, bis das grossflächige Kopfteil, vorzugsweise bündig, an der Oberfläche der Platte anliegt.

In Fig. 5 ist ein Befestigungselement 31 gemäss Fig. 3 dargestellt, das teilweise in das Material einer Isolationsplatte P eingezogen worden ist und noch nicht vollständig im Untergrund U, beispielsweise einem Hohllochziegel, verankert ist. Es ist deutlich erkennbar, dass der Bohrkopf 12 des Bohrwerkzeugs 9 das Vorderende 6 des Schafts 2 überragt. Dadurch wird erst unmittelbar vor dem nachfolgenden Vorderende 6 des Befestigungselements 31 die Aufnahmebohrung A erstellt. Die biegsamen Segmente 38 werden vom Bohrwerkzeug 9 in das Innere der Ausnehmung 34 gedrückt. Am Bohrwerkzeug 9 kann, wie in der Darstellung angedeutet, eine umlaufende Nut 17 vorgesehen sein, die beim Herausziehen des Bohrwerkzeugs 9 aus dem Befestigungselement 31 in Eingriff mit den biegsamen Segmenten gelangt und diese wieder aus der Ausnehmung 34 herauszieht. Auf diese Weise ragen nach der Montage die Segmente wieder zum Zentrum und können als Unterlage für eine nachträglich aufgebrachte Putzschicht dienen.

## Patentansprüche

1. Befestigungselement umfassend einen rohrförmig ausgebildeten, metallischen Schaft (2) mit einer axialen Durchgangsbohrung (3) und einem sich über die gesamte Schaftlänge erstreckenden axialen Schlitz (8) im Mantel des Schafts (2), sowie mit Lastangriffsmitteln (14) am der Setzrichtung abgewandten rückwärtigen Endabschnitt (13) des Schafts (2), wobei der Schaft (2) einen Aussendurchmesser aufweist, der sich von seinem rückwärtigen Endes (4) zu seinem axial gegenüberliegenden Vorderende (6) verjüngt, **dadurch gekennzeichnet,** dass am Vorderende des Schafts (2) Meisselschneiden (7) vorgesehen sind.

2. Befestigungselement nach Anspruch 1, dadurch gekennzeichnet, dass der Schaft (2) an seinem rückwärtigen Ende (4) einen tellerfederartigen Kragen (5) aufweist, der sich im wesentlichen radial erstreckt.

3. Befestigungselement nach Anspruch 1 oder 2, dadurch gekennzeichnet, dass die an der Innenwandung des Schafts (2) gemessene grösste Weite (w) des axialen Schlitzes (8) 25% bis 50% des Aussendurchmessers (d) des Schafts (2) im Bereich seines rückwärtigen Endes (4) beträgt.

4. Befestigungselement nach Anspruch 3, dadurch gekennzeichnet, dass die Weite des Schlitzes (8) vom rückwärtigen Ende (4) des Schafts zum Vorderende (6) abnimmt.

5. Befestigungselement nach Anspruch 4, dadurch gekennzeichnet, dass der axiale Schlitz (8) im Bereich des Vorderendes (6) des Schafts (2) durch einen Schweisspunkt oder dergleichen geschlossen ist.

6. Befestigungselement nach einem der vorangehenden Ansprüche, dadurch gekennzeichnet, dass die Lastangriffsmittel (14) vorzugsweise aus Kunststoff bestehen und ein Fussteil (22) und einen vom Fussteil (22) abragenden, im wesentlichen bogenförmigen Aufnahmebügel (23) umfassen, wobei im Fussteil (22) eine Durchgangsbohrung (24) für den Schaft (2) vorgesehen ist.

7. Befestigungselement nach einem der Ansprüche 1 - 5, dadurch gekennzeichnet, dass die Lastangriffsmittel (14) vorzugsweise aus Kunststoff bestehen und ein grossflächiges Kopfteil (32) mit einem davon abragenden Schaftteil (33) umfassen, wobei Kopfteil (32) und Schaftteil (33) von einer ein Widerlager für den rückwärtigen Abschnitt des Schafts (2) des Befestigungselements (31) aufweisenden Ausnehmung (34) durchsetzt sind und im kopfseitigen Mündungsbereich (37) der Ausnehmung (34) biegsame Verschlusselemente (38), vorzugsweise gegen das Zentrum ragende, biegsame Segmente, vorgesehen sind.

8. Befestigungselement nach Anspruch 7, dadurch gekennzeichnet, dass das Widerlager durch eine Schulter (35) in der Ausnehmung (34) im Schaftteil (33) gebildet ist, die vom freien Vorderende (36) des Schaftteils (33) einen Abstand (a) von etwa 8mm bis etwa 25 mm aufweist.

9. Verfahren zur Verankerung eines Befestigungselements (1; 21; 31) gemäss einem der Patentansprüche 1 - 8, dadurch gekennzeichnet, dass ein Bohrwerkzeug (9) durch die axiale Durchgangsbohrung (3) des Schafts (2) des Befestigungselements (1; 21; 31) geführt wird, deren Bohrkopf (12) das Schneiden (7) tragende Vorderende (6) des Schafts (2) überragt, wobei der grösste Durchmesser des Bohrkopfs (12) kleiner ist als der Innendurchmesser der Durchgangsbohrung (3), dass das Befestigungselement (1; 21; 31), das gegenüber der erstellten Aufnahmebohrung (A) ein Übermass aufweist, synchron mit dem Bohrvorgang durch schlagendes Eintreiben in der Aufnahmebohrung (A) verankert, insbesondere verklemmt wird, und dass das Bohrwerkzeug (9) nach erfolgter Verankerung des Befestigungselements (1; 21; 31) im Untergrund (U) aus der axialen Durchgangsbohrung (3) des Schafts (2) herausgezogen wird.

10. Verfahren nach Anspruch 9, dadurch gekennzeichnet, dass das Bohrwerkzeug (9) an eine Drehbohreinrichtung (15) mit Axialschlagunterstützung angekoppelt wird, dass die Erstellung der Aufnahmebohrung (A) drehend erfolgt und synchron dazu das Befestigungselement (1; 21; 31) durch axiale Schläge in den Untergrund (U) eingetrieben wird, wobei der Schaft (2) und das Bohrwerkzeug (9) voneinander drehentkoppelt sind und sich das rückwärtige Ende (4) des Schafts (2) des Befestigungselements (1; 21; 31) in Anlage zu einer Anschlagschulter (11) am Bohrwerkzeug (9) befindet.

## Claims

1. Fastening element, comprising a tubular metallic shaft (2) with an axial throughbore (3) and an axial slot (8), which extends over the entire shaft length, in the casing of the shaft (2), as well as load engaging means (14) at the rearward end section (13) of the shaft facing away from the setting direction, and the shaft (2) has an outside diameter which narrows from its rear end (4) towards its axially opposite frontal end (6), **characterised in that** chiselling cutters (7) are provided at the front end of the shaft (2).

2. Fastening element according to Claim 1, **characterised in that** the shaft (2) comprises at its rearward end (4) a cup-spring like collar (5) which extends essentially radially.

3. Fastening element according to Claim 1 or 2, **characterised in that** the largest width (w) of the axial slot (8) as measured on the inside wall of the shaft (2) lies between 25% and 50% of the outside diameter (d) of the shaft (2) in the area of its rearward end (4).

4. Fastening element according to Claim 3, **characterised in that** the width of the slot (8) reduces from the rearward end (4) of the shaft towards the front end (6).

5. Fastening element according to Claim 4, **characterised in that** the axial slot (8) is in the area of the front end (6) of the shaft (2) closed by means of a welding spot or the like.

6. Fastening element according to one of the above claims, **characterised in that** the load engaging means (14) are preferably made of plastic and include a foot portion (22) and an essentially arced receiving yoke (23) which extends from the foot portion (22), and in the foot portion (22) is provided a throughbore (24) for the shaft (2).

7. Fastening element according to one of Claims 1 - 5, **characterised in that** the load engaging means (14) are preferably made of plastic and include a large surface head portion (32) with a therefrom protruding shaft portion (33), and the head portion (32) and shaft portion (33) are passed through by a cutout (34) comprising an abutment for the rearward section of the shaft (2) of the fastening element (31), and in the headsided mouth area (37) of the cutout (34) are provided flexible sealing elements (38), preferably flexible segments protruding towards the centre.

8. Fastening element according to Claim 7, **characterised in that** the abutment is formed by a shoulder (35) in the cutout (34) in the shaft portion (33) which is at a distance (a) of between approximately 8 mm and approximately 25 mm from the free front end (36) of the shaft portion (33).

9. Method for anchoring a fastening element (1; 21; 31) according to one of Patent Claims 1 - 8, **characterised in that** drilling tool (9) is guided through the axial throughbore (3) of the shaft (2) of the fastening element (1; 21; 31) the drillhead (12) of which projects over the front end (6) of the shaft (2) which supports cutters (7), and the largest diameter of the drillhead (12) is smaller than the inside diameter of the throughbore (3), and the fastening element (1; 21; 31) which is overdimensioned relative to a produced receiving bore (A) is anchored synchronously with the drilling process by being percussively driven into the receiving bore (A), in particular by being clamped, and the drilling tool (9) is, following completed anchoring of the fastening element (1; 21; 31) in the base (U), pulled out of the axial throughbore (3) of the shaft. (2).

10. Method according to Claim 9, **characterised in that** the drilling tool (9) is coupled to an axially percussion assisted rotary drilling device (15), and the production of the receiving bore (A) is achieved by rotation, and synchronously therewith the fastening element (1; 21; 31) is driven into the base by axial blows, and the shaft (2) and the drilling tool (9) are rotary disengaged from each other and the rearward end (4) of the shaft (2) of the fastening element (1; 21; 31) is placed into abutment with an abutment shoulder (11) on the drilling tool (9).

## Revendications

1. Élément de fixation comprenant une tige métallique de forme tubulaire (2) pourvue d'un trou axial débouchant (3) et d'une fente axiale (8) s'étendant sur toute la longueur de la tige dans la surface périphérique de la tige (2), ainsi que des moyens d'application de charge (14) au niveau de la portion d'extrémité arrière (13) de la tige (2) située à l'opposé du sens d'enfoncement, la tige (2) présentant un diamètre extérieur qui diminue de son extrémité arrière (4) à son extrémité avant opposée axialement (6), caractérisé en ce que des taillants de burinage (7) sont prévus à l'extrémité avant de la tige (2).

2. Élément de fixation selon la revendication 1, caractérisé en ce que la tige (2) comporte, à son extrémité arrière (4), un collet en forme de ressort-diaphragme (5) qui s'étend sensiblement radialement.

3. Élément de fixation selon la revendication 1 ou 2, caractérisé en ce que la largeur maximale (w) de la fente axiale (8) mesurée au niveau de la paroi intérieure de la tige (2) correspond à 25 % à 50 % du diamètre extérieur (d) de la tige (2) dans la zone de l'extrémité arrière (4) de celle-ci.

4. Élément de fixation selon la revendication 3, caractérisé en ce que la largeur de la fente (8) diminue de l'extrémité arrière (4) de la tige vers l'extrémité avant (6).

5. Élément de fixation selon la revendication 4, caractérisé en ce que, dans la zone de l'extrémité avant (6) de la tige (2), la fente axiale (8) est fermée par un point de soudage ou analogue.

6. Élément de fixation selon une des revendications précédentes, caractérisé en ce que les moyens d'application de charge (14) sont réalisés de préférence en matière plastique et comprennent une partie de pied (22) et un étrier récepteur sensiblement arqué (23) partant de la partie de pied (22), un trou débouchant (24) pour la tige (2) étant prévu dans la partie de pied (22).

7. Élément de fixation selon l'une des revendications 1 à 5, caractérisé en ce que les moyens d'application de charge (14) sont réalisés de préférence en matière plastique et comprennent une partie de tête à grande surface (32) avec une partie de tige (33) dépassant de celle-ci, la partie de tête (32) et la partie de tige (33) étant traversées par un évidement (34) comportant un contre-appui pour la portion arrière de la tige (2) de l'élément de fixation (31), et des éléments de fermeture flexibles (38), de préférence des segments flexibles faisant saillie de préférence vers le centre, étant prévus dans la zone débouchante (37) de l'évidement (34).

8. Élément de fixation selon la revendication 7, caractérisé en ce que le contre-appui est formé par un épaulement (35) dans l'évidement (34) de la partie de tige (33), ledit épaulement présentant une distance (a) d'environ 8 mm à environ 25 mm par rapport à l'extrémité avant libre (36) de la partie de tige (33).

9. Procédé pour l'ancrage d'un élément de fixation (1 ; 21 ; 31) selon l'une des revendications 1 à 8, caractérisé en ce qu'on engage, dans le trou axial débouchant (3) de la tige (2) de l'élément de fixation (1 ; 21 ; 31), un outil de forage (9) dont la tête de forage (12) dépasse de l'extrémité avant (6) de la tige (2) portant des taillants (7), le diamètre maximal de la tête de forage (12) étant inférieur au diamètre intérieur du trou débouchant (3), en ce qu'on ancre, en particulier par serrage, l'élément de fixation (1 ; 21 ; 31), lequel présente une surmesure par rapport au trou débouchant réalisé (A), dans le trou débouchant (A) par enfoncement percutant synchrone avec l'opération de forage, et en ce que, au terme de l'ancrage de l'élément de fixation (1 ; 21 ; 31), on retire l'outil de forage (9) du support (U) par le trou axial débouchant (3) de la tige (2).

10. Procédé selon la revendication 9, caractérisé en ce qu'on accouple l'outil de forage (9) à un dispositif de forage rotatif (15) à assistance par percussion axiale, en ce que la réalisation du trou débouchant (A) s'effectue par rotation et, de manière synchrone à celle-ci, l'élément de fixation (1, 21 ; 31) est enfoncé dans le support (U) par des percussions axiales, la tige (2) et l'outil de forage (9) étant dissociés l'un de l'autre en rotation, et l'extrémité arrière (4) de la tige (2) de l'élément de fixation (1 ; 21 ; 31) se trouvant en contact avec un épaulement de butée (11) de l'outil de forage (9).
